# EUROPEAN PATENT APPLICATION

(11) **EP 2 184 230 A2**
(43) Date of publication of application: **12.05.2010**
(21) Application number: 09169094.1
(22) Date of filing: 31.08.2009
(51) Int. Cl.: B64C 39/02

(54) **Soldier portable generator**

(30) Priority: 10.11.2008 US 268056
(71) Applicant: Honeywell International, Inc., Morristown NJ 07962 (US)
(72) Inventor: Wilson III, Samuel Baxter, Morristown, NJ 07962-2245 (US)
(74) Representative: Buckley, Guy Julian

(57) **Abstract**

A soldier portable generator and a method for powering a soldier portable generator are provided. The soldier portable generator includes a generator base (202), where the generator base houses a generator (204) having a generator interface (206). The soldier portable generator further includes an Unmanned Air Vehicle (UAV) turbine engine (110). The UAV turbine engine is connected to the generator and powers the generator.

## Description

This invention was made with Government support under Contract No. W56HZV-05-C-0724 awarded by the United States Army. The Government may have certain rights in this invention.

### FIELD

The present invention relates generally to ducted fan air-vehicles and generators, and more particularly, relates to a system and method for a soldier portable generator.

### BACKGROUND

Ducted fan air-vehicles are known for performance capability in multiple flight conditions. For instance, ducted fan air-vehicles have the ability of forward flight and are well known for stationary hovering aerodynamic performance. Ducted fan air-vehicles are useful for a number of military purposes. For instance, ducted fan air-vehicles may be used to gather reconnaissance information while not putting a soldier in harm's way. Thus, it is advantageous for a soldier to carry or transport a ducted fan air-vehicle with them, for example, to the battlefield or on a mission.

However, due to the size of some ducted fan-air vehicles, it may be difficult for a single soldier or multiple soldiers to transport a ducted fan-air vehicle with them to the battlefield or on a mission. In order to make a ducted fan system soldier portable, elements of the system may be disassembled and transported separately. For instance, it may be possible to separate the components of a ducted fan air-vehicle, such as a Class 1 Unmanned Aircraft System (UAS). A Class 1 UAS could be disassembled into several items, and a soldier or soldiers could then easily transport the several items.

In addition to a UAV, soldiers may need to carry additional equipment with them into battle or on a mission. Typically, a soldier may need to carry as much as 100 pounds of gear into battle or on a mission. In some cases, much of that weight (e.g., a third of that weight) may be batteries that are used to operate various other devices the soldier may need. As a soldier is limited by physical constraints and endurance constraints, it is beneficial to minimize the amount of gear a soldier must carry with them on a mission. Therefore, it would be beneficial to provide a method and system for reducing the overall weight a soldier or soldiers would have to bear when carrying or transporting equipment on a mission.

### SUMMARY

The present disclosure describes a soldier portable generator and a method for powering a soldier portable generator. The soldier portable generator includes a generator base having a generator. The soldier portable generator also includes an Unmanned Aerial Vehicle (UAV) turbine, where the UAV turbine is a turbine engine that is from a UAV. The UAV turbine is connected to the generator and powers the soldier portable generator.

In the UAV, the UAV turbine connects to the gearbox at a gearbox interface. Preferably, the UAV turbine may be separated from the gearbox of the UAV at the gearbox interface. In the preferred embodiment, the generator in the soldier portable generator has a generator interface that the UAV turbine connects to. The generator interface is preferably substantially similar to the gearbox interface of the UAV that the UAV turbine is taken from. Therefore, the UAV turbine may be easily compatible with both the UAV and the soldier portable generator. The soldier portable generator may be used to provide direct electrical contact for any purpose. For example, the soldier portable generator may be used in order to provide power for the recharging of batteries.

A method for powering a soldier portable generator is also described. The method includes separating a turbine engine from a UAV. The turbine engine may then be connected to a soldier portable generator. The soldier portable generator has a generator base housing a generator, and the generator may have a generator interface. The turbine engine is connectable to the generator interface. The soldier portable generator may be powered with the turbine.

These as well as other aspects and advantages will become apparent to those of ordinary skill in the art by reading the following detailed description, with reference where appropriate to the accompanying drawings. Further, it is understood that this summary is merely an example and is not intended to limit the scope of the invention as claimed.

### BRIEF DESCRIPTION OF THE DRAWINGS

Presently preferred embodiments are described below in conjunction with the appended drawing figures, wherein like reference numerals refer to like elements in the various figures, and wherein:
Fig. 1A is a pictorial representation of a UAV having a UAV turbine, according to an example;
Fig. 1B is a pictorial representation of a disassembled UAV, according to an example;
Fig. 1C is a pictorial representation of a disassembled UAV, according to an example; and
Fig. 2 is a pictorial representation of a soldier portable generator, according to an example.

### DETAILED DESCRIPTION

Disclosed herein are a soldier portable generator and a method for powering a soldier portable generator. As mentioned above, it is beneficial to limit the amount of weight a soldier must carry or transport when on a mission. Both an Unmanned Aerial Vehicle (UAV) and a generator may use a turbine engine. When a UAV is not in operation, the turbine engine of a UAV may be taken out of the UAV and may be used to power a generator, such as a soldier portable generator. A soldier portable generator using a UAV turbine is advantageous to soldiers. Beneficially, using a turbine engine from a UAV to power a soldier portable generator may reduce the total amount of weight a soldier must carry when on a mission. The soldier portable generator may be used to recharge batteries, thereby reducing the number of batteries soldiers may need to carry or transport. Typically, soldiers may need to carry 10-30 pounds of batteries, which may be used to power a variety of equipment, such as radios/communications gear, flashlights, night vision goggles, Global Positioning System (GPS) devices, and even the Operator Control Unit (OCU) which interfaces to the UAV. Running the generator to recharge batteries with the soldier portable generator may allow soldiers to offload the number and weight of batteries. Further, since the soldier portable generator uses an engine from another piece of equipment used by soldiers, the soldier portable generator may be lighter and more compact than a typical generator.

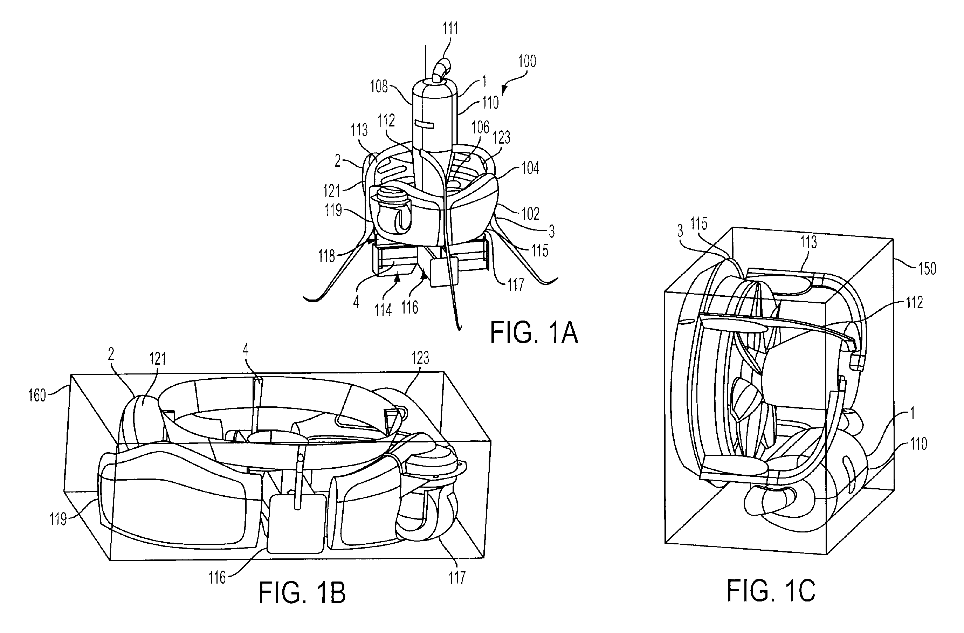

In accordance with a preferred embodiment, a UAV turbine may be taken from a UAV and used in a soldier portable generator system. As previously mentioned, a UAV may be designed to have the capability of being disassembled and spread over several systems in order to make the UAV system more portable. A UAV may be disassembled in a variety of different ways and into a variety of different configurations. An example of a UAV disassembly is described with reference to Figure 1.

Figure 1 is a pictorial representation of a typical ducted fan-air vehicle, such as UAV 100. The UAV 100 includes an air duct 102 having a duct lip 104 and a fan 106 located within the air duct 102. The UAV may have a center body 108. The center body 108 may be a housing that contains other components of the air-vehicle 100. The center body 108 may contain an engine for powering the air-vehicle 100. The engine may be a turbine engine 110. Exhaust port 111 may serve as an opening to allow exhaust fumes to exit turbine engine 110. The center body 108 may also contain a gearbox 112, which contains an interface where the turbine engine may connect to the gearbox. The gearbox may operate to control turbine engine 110. For example, gearbox 112 may control how quickly turbine engine rotates the fan blades of UAV 100. Support arms 113 may connect the gearbox to the airframe 115. Further, center body 108 may contain additional components for air-vehicle operation, such as an avionics system. The ducted fan may include pods attached to the air frame 115, such as pods 117, 119, 121, and 123. The pods may be used for carrying various payloads, and each pod may be a module. A module is a self-contained component of a system, which has a well-defined interface to other components. The pods may be easily removed from and reattached to the airframe 115. Pods can be interchanged as units without disassembly of the pod itself. In a UAV, the payload may carry equipment or instruments, for example. More specifically, a pod may carry cameras, fuel, gas, or electronics. For example, pods can be fuel pods or pods housing electronic transportation gear.

The UAV 100 may also include a stator assembly 114 and vanes 116 for providing thrust vectoring. The stator assembly 114 and vane 116 may be located under the fan 106 located within the air duct 102. The stator assembly 114 may be located just under the fan 106 in the air duct 102 to reduce or eliminate the swirl and torque produced by the fan 106. The vanes 116 may also be placed under the fan 106. For instance, the vanes 116 may be placed slightly below an exit section 118 of the air duct 102. The UAV 100 may contain fixed and/or movable vanes 116 to perform thrust vectoring for the UAV 100.

In order to make a UAV soldier portable, it is possible to disassemble a UAV system and spread the item over several systems. For example, a UAV system may be disassembled as depicted in Figures 1B and 1C. In this example, the UAV system is disassembled into system 150 and system 160. System 150 includes turbine engine 110, air frame 115, support arms 113, and the gearbox 112. System 160 includes ducted fan pods 117, 119, 121, 123 and the vanes 116. This Figure is merely an example of how a UAV could be disassembled and spread over several systems. Other examples are possible as well.

In Figure 1B, the turbine engine 110 is located in system 150 and, more particularly, in the top corner of system 150. As illustrated in this figure, the turbine engine 110 is separated from the gearbox 112 of UAV 100. Preferably, the turbine engine is easily attached to and separated from the gearbox 112. For example, the turbine engine may have a shaft that plugs into the gearbox at a gearbox interface. When the shaft is plugged into the gearbox, the turbine engine may be secured to the gearbox in any way known in the art. For example, the turbine engine could be latched to the gearbox. Preferably, the turbine engine is tightly secured to the gearbox.

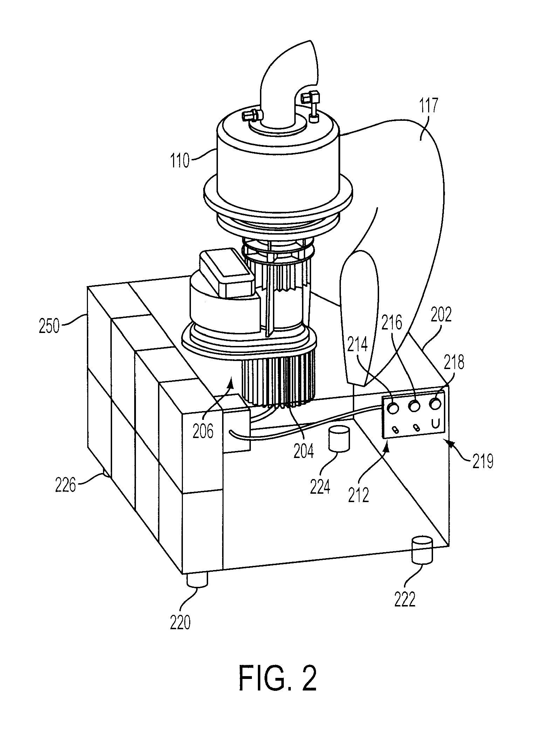

When turbine engine 110 is separated from UAV 100, the turbine engine 110 may be used to power a soldier portable generator. A soldier portable generator that uses a UAV turbine is described in detail with reference to Figure 2. As depicted in Figure 2, soldier portable generator 200 has a generator base 202. Generator base 202 houses a generator 204, which is capable of generating electric power. Generator 204 may be a generator that is operable with a turbine engine. Generator 204 may be any generator presently know in the art or later developed.

The generator base 202 may be designed in any manner to house the generator. In a preferred embodiment, the generator base is designed such the generator base is easily portable. For example, the generator base 202 may be rectangular, as depicted. Other shapes are possible as well. The base 202 many include a handle (not shown) that allows for the base to be easily picked up and set down. Further, base 202 may include legs 220, 222, 224, and 226. The legs may help support and stabilize the base when the soldier portable generator is in use.

Generator 204 has an interface 206, where a turbine engine may connect to the generator 204 in order to supply mechanical energy. As explained above, the turbine engine is from a UAV, such as turbine engine 110 from UAV 100. It should be understood that the UAV turbine may be a turbine engine taken from any type of UAV. For example, the UAV turbine may be taken from a UAV such as UAV 100. The UAV turbine may be taken from a Class I Unmanned Aerial System (UAS). Further, the UAV turbine may be taken from a Class II Organic Air Vehicle (OAV). Still further, the UAV turbine may be taken from other ducted fan air-vehicles, such as a Miniature Air Vehicle (MAV), OAV-I, and other vertical take-off and landing (VTOL) vehicles. Other types of UAVs having a turbine engine are possible as well.

The turbine engine may be connected to or secured to the generator 204 at the interface 206. For instance, the shaft of the turbine engine may be plugged into generator 204 at the interface 206. The engine may be tightly secured to the generator and generator base using, for example, latches. Additionally or alternatively, pins or a variety of other attachment mechanisms may be used. Other methods of securing the UAV turbine engine to the gearbox and the generator are possible as well.

Preferably, the connection of the UAV turbine to the gearbox of the UAV is substantially similar to the connection of the UAV turbine to the soldier portable generator. In a preferred embodiment, the interface 206 is substantially similar to the interface at the gearbox 112 of the UAV 100. As mentioned above, the turbine engine 110 is preferably easily connected to the gearbox 112 in order to allow for easy assembly and disassembly. When assembling UAV 100, the shaft of the turbine engine may slide into a gearbox hole at the gearbox interface. Similarly, the turbine engine is easily connected to the generator interface 206 in order to allow for easy assembly and disassembly. Just as with UAV 100, when assembling the solider portable generator, the shaft of the turbine engine may slide into a hole at the interface 206. Due to similar interfaces, the UAV turbine may be installed in (and removed from) both a UAV and a soldier portable generator in a very similar fashion. This similar fashion is beneficial to soldiers because it makes the installation and removal simple, as opposed to time consuming and difficult due to differences in the assembly of the two separate systems.

It should be understood that substantially similar interfaces means that the interface 206 and gearbox interface are designed such that the turbine engine 110 may easily connect to both. It is not necessary that the interfaces look substantially similar. Rather, the shaft of the turbine engine may plug into the generator in the same way the shaft of the turbine engine may plug into the gearbox. UAV turbine may be secured to the generator interface 206 in a similar manner as it secures to the gearbox in the UAV. For example, the UAV turbine may be latched to the generator interface 206. The UAV turbine engine may be attached to the generator using the same (or same type) of attachment mechanisms used for attachment to the UAV gearbox. Alternatively, different attachment mechanisms could be used.

The soldier portable generator 200 may require fuel in order to operate. Fuel may be provided to the UAV turbine in the soldier portable generator 200 in a variety of ways. In a preferred embodiment, a fuel pod from a UAV may be used to provide the fuel. As mentioned above, a UAV may be designed to have modular pods that may be attached to a ducted fan core. Modular pods may be easily attached and detached from UAV. Accordingly, fuel pods may easily be detached from a UAV and used for other purposes, such as operation with the soldier portable generator.

When a UAV is not in use, not only may the UAV turbine be used to operate a soldier portable generator, a modular fuel pod may be used to provide fuel when the turbine engine is operating as a generator. Such a fuel pod arrangement is shown in Figure 3. A fuel pod, which may be, for example, fuel pod 117, may be connected to the turbine engine in order to provide flow of fuel to the engine when the engine is running. For example, a fuel line (not shown) may run from the fuel pod to the turbine. However, the fuel may be provided by other means. For example, the generator base 202 itself may comprise a fuel section.

In a preferred embodiment, the fuel pod may be taken from the same UAV that the turbine engine is taken from. For example, the fuel pod may be fuel pod 117 from UAV 100 and the turbine engine may be turbine engine 110 from UAV 100. However, it is not necessary that the fuel pod and the turbine engine be taken from the same UAV. Alternatively, the fuel pod and the turbine engine could be from two different UAVs.

The generator base may also include a control portion, such as control panel 210, coupled with the generator 204 and the UAV turbine 110. The control panel 210 may include a switch 212 that may operate to turn the soldier portable generator on or off. Further, the control panel 210 may include lights 214, 216, and 218 to indicate the status of the soldier portable generator. The control panel 210 may also include a plug 219.

The generator may operate to provide a direct electrical contact. For example, the generator may charge batteries, such as batteries 250. When the batteries are charged, the control panel 210 could indicate when the charge is complete. For example, light 214 may be a red light indicating that the battery charge is low (e.g., less than 25%), light 216 may be a yellow light indicating that the battery charge is medium (e.g., 25%-90%), and light 218 may be a green light indicating that the battery charge is high (e.g., greater than 90%). The batteries may be used for any items a soldier uses batteries for. For example, a soldier may use the batteries for radios, night vision goggles, or GPS devices. Other items are possible as well. The generator may operate to provide direct electrical contact for other items as well. For example, devices may be directly plugged into the generator. The plug 219 may be used to plug devices with electrical cords into the generator, and the generator may power devices that are plugged in. Soldier portable items needing power, such as radar systems, radios, night vision goggles, and GPS devices may be plugged into the generator. In a preferred embodiment, the generator may operate to generate an amount of power that is useful for a soldier's purposes. For example, the generator may generate between 5 to 15 kilo-watts of power.

In addition to powering a soldier-portable generator, a UAV turbine 110 may be used to power other systems. For example, since a UAV turbine engine may be easily taken from a UAV, the turbine engine may be taken from a UAV and installed into any other system that requires a turbine engine. The turbine may act as a plug and play turbine for a variety of systems. For instance, a turbine may be used to power a ground robot. The ground robot may be designed to operate with a UAV turbine. For example, the ground robot may include an interface to which the UAV turbine may be attached. The ground robot may also include a gearbox designed to make the turbine engine operate according to the parameters required for the ground robot. Other systems that may operate with a UAV turbine engine are possible as well.

Beneficially, a UAV turbine engine such as turbine engine 110 is well-suited for operation in a generator. A typical UAV turbine is a small turbine engine that is capable of running at a high RPM. For example, a typical 10 horsepower turbine shaft runs at high rpm (generally around 150,000 rpm). A gearbox in a UAV is used to slow the propeller shaft to a nominal 5,000 rpm. A generator operating at high speed is lighter and more efficient than a generator with an engine having a low RPM. As is known in the art, the power level of a generator may be determined by the size of the generator magnet and the speed the magnetic field moves through the electrical wire (or the RPM of the turbine engine powering the generator). Therefore, assuming that two turbines have the same sized generator magnet, a generator having a turbine engine with a high RPM may generate a higher power output than a generator having a turbine engine with a low RPM. Similarly, a generator having a small generator magnet may generate more power if the turbine engine has a high RPM.

Typically, a soldier does not require a generator capable of producing an extremely large power output. For example, a generator used by a soldier may only require approximately 1 to 5 kilo-watts of power. Commercial generators used by home-owners are typically 5 kilo-watt systems. However, commercial generators are not well-suited for military purposes because they may be too heavy. A trailer version that is a 10 kilo-watt system has been used for military purposes. Further, fuel cell/battery systems may be used as an alternative to batteries, and these systems may have a system output of 20 watts continuously with peaks of up to 200 watts. This amount of power typically required by soldiers may be supplied with a small sized generator that uses a high RPM turbine. Accordingly, the soldier portable generator does not need to be overly large, as a small generator will suffice to provide the power range typically required by soldiers. Therefore, a soldier portable generator using a UAV turbine engine may be small and compact, because the turbine is typically very small and light weight for the power output (but the gearbox is often as heavy as the turbine). Beneficially, a small and compact generator may be easy to transport, which, as mentioned above, is advantageous to soldiers. The soldier portable generator is also easy to transport because, when not in use, the soldier portable generator may not include the UAV turbine engine. As a consequence, the weight a soldier needs to carry in order to have a generator is reduced.

A UAV turbine engine is also well-suited for operation in a soldier portable generator because UAV turbine engines are typically lightweight. Because a UAV turbine is lightweight, a soldier may easily move or transport a UAV turbine from one system to another. Such transport does not require much time or energy, both of which may be highly critical for soldiers. Therefore, soldiers may move the UAV from one system to another without much difficulty or without expending much energy.

As a further benefit, the soldier portable generator system allows soldiers to reduce the total amount of weight they must carry without sacrificing any equipment. As previously mentioned, a soldier portable generator may be used to charge batteries. The weight of a turbine, generator, and fuel may be less than the weight of additional batteries a soldier would have to carry if it were not for the soldier portable generator. Carrying less weight may provide a tactical advantage for soldiers when on a mission. For example, carrying less weight may make a soldier expend less energy and therefore increase a soldier's endurance.

The soldier portable generator also offers soldiers the versatility to use equipment as needed, while drastically reducing the weight of equipment a soldier must transport or carry. The turbine engine of a UAV can easily be separated from a UAV and used to power a soldier portable generator. Since a UAV turbine is well-suited for operating in both a UAV system and a generator system and since a UAV turbine may easily be moved from one system to another, the UAV turbine may be used in each system as necessary. First, when a UAV is required for executing simple missions such as a program or reconnaissance, the UAV turbine may be used in a UAV. Second, when soldiers require a generator, the UAV turbine may be used in a soldier portable generator. For example, after a UAV has returned from a reconnaissance mission and is not scheduled to execute another mission for a few hours, the UAV turbine may be removed from the inactive UAV in order to be used in the soldier portable generator. Alternatively, when a section of UAV is undergoing repairs, the UAV turbine may be taken from the UAV and used in a soldier portable generator. Doing so is beneficial because turbine engine life, unlike a conventional Internal Combustion or piston engine, is not a strong function of run-time but is generally driven by thermal cycles, so running the turbine and keeping its temperature constant will increase its life. Many other situations or scenarios are possible as well.

It should be understood that the illustrated embodiments are examples only and should not be taken as limiting the scope of the present invention. The claims should not be read as limited to the described order or elements unless stated to that effect. Therefore, all embodiments that come within the scope and spirit of the following claims and equivalents thereto are claimed as the invention.

## Claims

1. A soldier portable generator comprising:
a generator base, wherein the generator base comprises a generator having a generator interface;
a UAV turbine, wherein the UAV turbine is connected to the interface, and wherein the UAV turbine powers the generator.

2. The soldier portable generator of claim 1, wherein the UAV turbine is a turbine from a Class I Unmanned Aircraft System vehicle.

3. The soldier portable generator of claim 1, wherein the UAV turbine is a turbine from a micro-air-vehicle (MAV).

4. The soldier portable generator of claim 1, wherein the generator produces approximately 5 to 15 kilo-watts of power.

5. The soldier portable generator of claim 1, wherein the UAV turbine is from a UAV comprising a gearbox having a gearbox interface, wherein the UAV turbine is separated from the UAV at the gearbox interface, and wherein the generator interface and the gearbox interface are substantially the same.

6. The soldier portable generator of claim 1, wherein the UAV turbine is fuel powered.

7. The soldier portable generator of claim 6, further comprising a modular UAV fuel pod used during flight, wherein the UAV fuel pod is connected to the UAV turbine in order to provide fuel to power the UAV turbine.

8. The soldier portable generator of claim 1, further comprising a control portion, wherein the control portion is coupled to the UAV turbine, and wherein the control portion is operable to control operation of the UAV turbine.

9. The soldier portable generator of claim 1, wherein the soldier portable generator is operable to provide direct electrical current.

10. The soldier portable generator of claim 9, wherein the soldier portable generator is operable to recharge batteries.
